# EUROPEAN PATENT SPECIFICATION

(11) **EP 1 400 750 B1**
(45) Date of publication and mention of the grant of the patent: **21.11.2012**
(21) Application number: 03255773.8
(22) Date of filing: 16.09.2003
(51) Int. Cl.: F23R 3/00, F23M 5/00, F23M 5/08

(54) **Double wall connector segment for a gas turbine with cooling channels having concavities**
Doppelwandiges Brennkammer-Verbindungselement mit Kühlkanälen mit Vertiefungen
Segment de connection à double paroi avec des canaux de refroidissement ayant des concavités, pour une turbine à gaz

(30) Priority: 18.09.2002 US 65108
(43) Date of publication of application: 24.03.2004
(73) Proprietor: GENERAL ELECTRIC COMPANY, Schenectady, NY 12345 (US)
(72) Inventor: Bunker, Ronald Scott, Niskayuna New York 12309 (US)
(74) Representative: Cleary, Fidelma

(56) References cited:
- EP-A2- 0 801 210
- EP-A2- 0 816 010
- WO-A1-99/64791
- US-B1- 6 314 716
- AFANASYEV V N ET AL: "TURBULENT FLOW FRICTION AND HEAT TRANSFER CHARACTERISTICS FOR SPHERICAL CAVITIES ON A FLAT PLATE" EXPERIMENTAL THERMAL AND FLUID SCIENCE, ELSEVIER SCIENCE INC, NEW YORK, US LNKD- DOI:10.1016/0894-1777(93)90075-T, vol. 7, 1 January 1993 (1993-01-01), pages 1-08, XP001202189 ISSN: 0894-1777

## Description

This invention relates generally to turbine components and more particularly to a generally cylindrical connector segment that connects a combustor liner to a transition piece in land based gas turbines.

Traditional gas turbine combustors use diffusion (i.e., non-premixed) flames in which fuel and air enter the combustion chamber separately. The process of mixing and burning produces flame temperatures exceeding 2149°C (3900 degrees F). Since conventional combustors and/or transition pieces having liners are generally capable of withstanding for about ten thousand hours (10,000) a maximum temperature on the order of only about 816°C (1500 degrees F), steps to protect the combustor and/or transition piece, as well as the intervening connecting segment, must be taken. This has typically been done by film-cooling which involves introducing the relatively cool compressor air into a plenum surrounding the outside of the combustor. In this prior arrangement, the air from the plenum passes through louvers in the combustor liner and then passes as a film over the inner surface of the combustor liner, thereby maintaining combustor liner integrity.

Because diatomic nitrogen rapidly disassociates at temperatures exceeding about 1650°C (about 3000°F), the high temperatures of diffusion combustion result in relatively large NOx emissions. One approach to reducing NOx emissions has been premix the maximum possible amount of compressor air with fuel. The resulting lean premixed combustion produces cooler flame temperatures and thus lower NOx emissions. Although lean premixed combustion is cooler than diffusion combustion, the flame temperature is still too hot for prior conventional combustor components to withstand.

Furthermore, because the advanced combustors premix the maximum possible amount of air with the fuel for NOx reduction, little or no cooling air is available, making film-cooling of the combustor liner and transition piece impossible. Thus, means such as thermal barrier coatings in conjunction with "backside" cooling have been considered to protect the combustor liner and transition piece from destruction by such high heat. Backside cooling involved passing the compressor air over the outer surface of the combustor liner and transition piece prior to premixing the air with the fuel.

Lean premixed combustion reduces NOx emissions by producing lower flame temperatures. However, the lower temperatures, particularly along the inner surface or wall of the combustor liner, tend to quench oxidation of carbon monoxide and unburned hydrocarbons and lead to unacceptable emissions of these species. To oxidize carbon monoxide and unburned hydrocarbons, a liner would require a thermal barrier coating of extreme thickness (1,27-2,54mm) mils) so that the surface temperature could be high enough to ensure complete burnout of carbon monoxide and unburned hydrocarbons. This would be approximately 982-1093°C (1800-2000 degrees F) bond coat temperature and approximately 1204°C (2200 degrees F). TBC (Thermal Barrier Coating) temperature for combustors of typical lengths and flow conditions. However, such thermal barrier coating thicknesses and temperatures for typical gas turbine component lifetimes are beyond current materials known capabilities. Known thermal barrier coatings degrade in unacceptably short times at these temperatures and such thick coatings are susceptible to spallation.

Advanced cooling concepts now under development require the fabrication of complicated cooling channels in thin-walled structures. The more complex these structures are, the more difficult they are to make using conventional techniques, such as casting. Because these structures have complexity and wall dimensions that may be beyond the castability range of advanced superalloys, and which may exceed the capabilities of the fragile ceramic cores used in casting, both in terms of breakage and distortion, new methods of fabricating must be developed to overcome these prior limitations. Possible geometries for enhanced cooling are disclosed in, for example, commonly owned U.S. Patent Nos. 5,933,699; 5,822,853; and 5,724,816.

The publication EP0801210 A2, which is considered the closest prior art to the invention, shows a transition piece for a gas turbine including a double walled structure having a plurality of cooling channels, both axial passages are formed in the area between the inner member of the combustor and the outer member thereof. The passages preferably extend both axially and circumferentially with respect to the direction of flow through the combustor-transition piece. The axial passages extend completely from one end to the other and the circumferential passages extend around the circumference of the transition piece.

By way of further example, enhanced cooling in a combustor liner is achieved by providing concave dimples on the cold side of the combustor liner as described in U.S. Patent No. 6,098,397.

In some gas turbine combustor designs, a generally cylindrical segment that connects the combustion liner to the transition piece and also requires cooling. This so-called combustor liner segment is a double-wall piece with cooling channels formed therein that are arranged longitudinally in a circumferentially spaced array, with introduction of cooling air from one end only of the segment. The forming of these cooling channels (as in U.S. Patent No. 5,933,699, for example) has been found, however, to produce undesirably rough surfaces, and in addition, the design does not allow for the spaced introduction of coolant along the segment.

Accordingly, there is a need for enhanced cooling in the segment connecting the combustion liner and transition piece that can withstand high combustion temperatures.

This invention provides a generally cylindrical double-wall segment for connecting the combustion liner and the transition piece with enhanced cooling achieved by the inclusion of concavity arrays on both major surfaces of each cooling channel, thereby providing as much as 100% cooling improvement. As a result, the channels may then also be extended by as much as two times their original length without increasing the volume of required cooling air. This arrangement also allows the cooling air to be fed in by impingement cooling holes spaced axially along the segment, rather than forced in only at one end of the segment.

In the exemplary embodiments, both major surfaces of the double-walled cooling channels are machined to include arrays of concavities that are generally closely spaced together, but may vary in spacing depending upon specific application needs. The spacing, cavity depth, cavity diameter, and channel height determine the resulting thermal enhancement obtained. The concavities themselves may be hemispherical, partially hemispherical, ovaloid, or non-axisymmetric shapes of generally spherical form. Cooling air is either introduced at one end of the channels, or alternately, through axially spaced impingement cooling holes, in combination with the cooling air inlet at one end of the segment.

The formation of arrays of surface concavities on the "hot" side of the double-walled channels creates a heat transfer enhancement by so-called whirlwind effect from each cavity. The placement of similar arrays on the "cold" surface also serves to enhance heat transfer if the walls are spaced closely together. Due to the bulk vortex mixing motion of the flow interaction with the cavities, the friction factor increase is small compared to that of a smooth surface. This overall cooling enhancement allows less total coolant to be used at any location in the channels. Moreover, by spacing the introduction of cooling air into the channels using impingement holes, the resultant effect is that the overall length of the enhanced double wall segment may be extended by about two times, without the use of additional coolant.

Accordingly, the present invention provides a connector segment for connecting a combustor liner and a transition piece in a gas turbine, the connector segment having a substantially cylindrical shape and being of double-walled construction including inner and outer walls and a plurality of cooling channels extending axially along the segment, between said inner and outer walls, said cooling channels defined in part by radially inner and outer surfaces, wherein both of said radially inner and outer surfaces are formed with an array of concavities, each concavity having a diameter D with centre to centre distance between adjacent concavities being equal to about 1.1 - 2 D and wherein a ratio of channel height to concavity diameter D is in the range of 0.25 - 5.

The invention will now be described in greater detail, by way of example, with reference to the drawings, in which:-
FIGURE 1 is a schematic representation of a known gas turbine combustor;
FIGURE 2 is a perspective view of a known, axially cooled, cylindrical combustor liner connector segment;
FIGURE 3 is a partial cross section of a cylindrical cooling segment, projected onto a horizontal plane, illustrating cooling channels with enhanced cooling features in accordance with the invention;
FIGURE 4 is a perspective view of the segment in Figure 3, showing the addition of impingement cooling holes axially spaced along the length of the cooling channels;
FIGURE 5 is a schematic representation of surface concavities, viewed in plan, as they would appear along the length of both major surfaces of a cooling channel;
FIGURE 6 is a schematic representation of a cooling channel, viewed in plan, and with the top surface of the channel removed, illustrating an array of surface concavities in the lower surface of the channel in accordance with the invention; and
FIGURE 7 is a schematic representation of one major surface of a cooling channel illustrating the cross-sectional shape of surface concavities along the interior surface thereof.

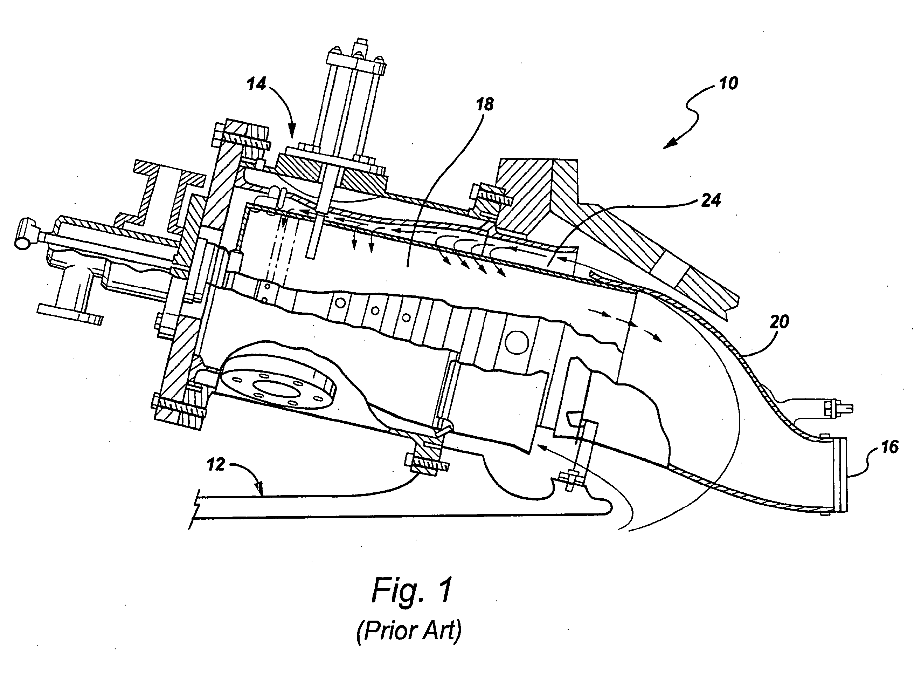

Figure 1 schematically illustrates a typical can annular reverse-flow combustor 10 driven by the combustion gases from a fuel where a flowing medium with a high energy content, i.e., the combustion gases, produces a rotary motion as a result of being deflected by rings of blading mounted on a rotor. In operation, discharge air from the compressor 12 (compressed to a pressure on the order of about 17,2-27,6 bar (250-400 lb/in²) reverses direction as it passes over the outside of the combustors (one shown at 14) and again as it enters the combustor en route to the turbine (first stage indicated at 16). Compressed air and fuel are burned in the combustion chamber 18, producing gases with a temperature of about 1500° C (about 2730° F). These combustion gases flow at a high velocity into turbine section 16 via transition piece 20.

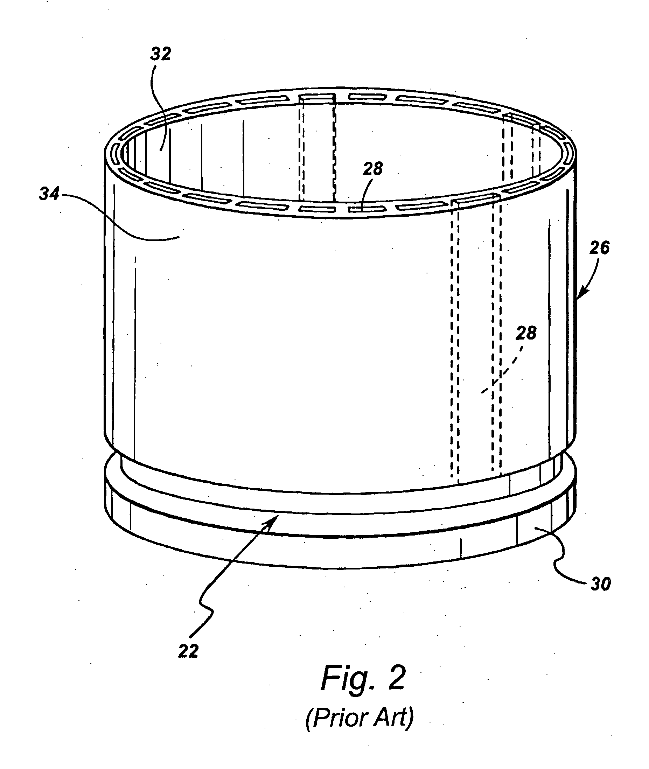

A connector segment 22 (Fig. 2) may be located between the transition piece 20 and the combustor liner 24 that surrounds the combustion chamber 18.

In the construction of combustors and transition pieces, where the temperature of the combustion gases is about or exceeds about 1500° C., there are no known materials which can survive such a high intensity heat environment without some form of cooling.

Figure 2 shows a cylindrical segment 26 that may be used to connect the combustor liner 24 to the transition piece 20. The segment 26 is of doubled-walled construction with axially extending cooling channels 28 arranged in circumferentially spaced relationship about the segment. The combustor liner and transition piece may also be of double-walled construction with similar cooling channels. The segment is shown with a radial attachment flange 30, but the manner in which the segment is attached to the combustor liner and transition piece may be varied as required. The segment 26 may be made of a Ni-base superalloy, Haynes 230. Depending on temperatures of individual applications, other materials that could be used include stainless steels, alloys and composites with a Ni-base, Co-base, Fe-base, Ti-base, Cr-base, or Nb-base. An example of a composite is a FeCrAIY metallic matrix reinforced with a W phase, present as particulate, fiber, or laminate. The materials used in the hot wall and cold wall of the segment are not required to be the same alloy. For purposes of this discussion, inner wall 32 of the segment is the "hot" wall, and outer wall 34 is the "cold" wall.

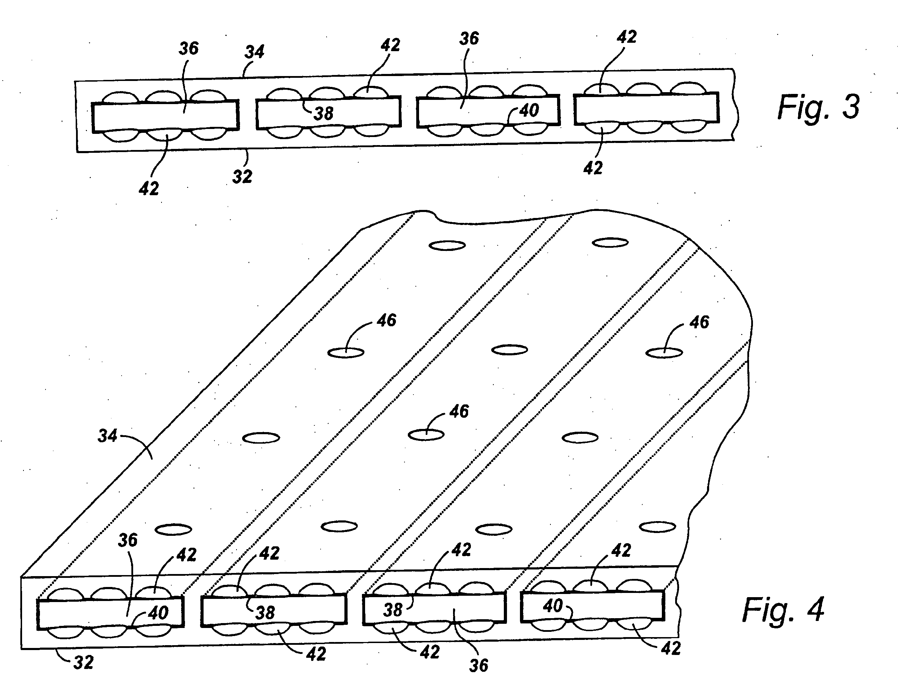

Referring now to Figures 3 and 4, schematic representations of cooling channel configurations in accordance with this invention are shown. The segment is partially shown in planar form, prior to hoop-rolling into the finished cylindrical shape.

Re-designed cooling channels 36 are elongated and generally rectangular shape, each having upper and lower surfaces 38, 40, respectively. Based on the previously characterization of outer and inner walls 34, 32, it will be appreciated that surface or wall 38 is the "cold" surface or wall and surface or wall 40 is the "hot" surface or wall. In other words, in use, surfaces 32 and 40 are closest to the combustion chamber, while surfaces 34, 38 are closest to the compressor cooling air outside the combustor.

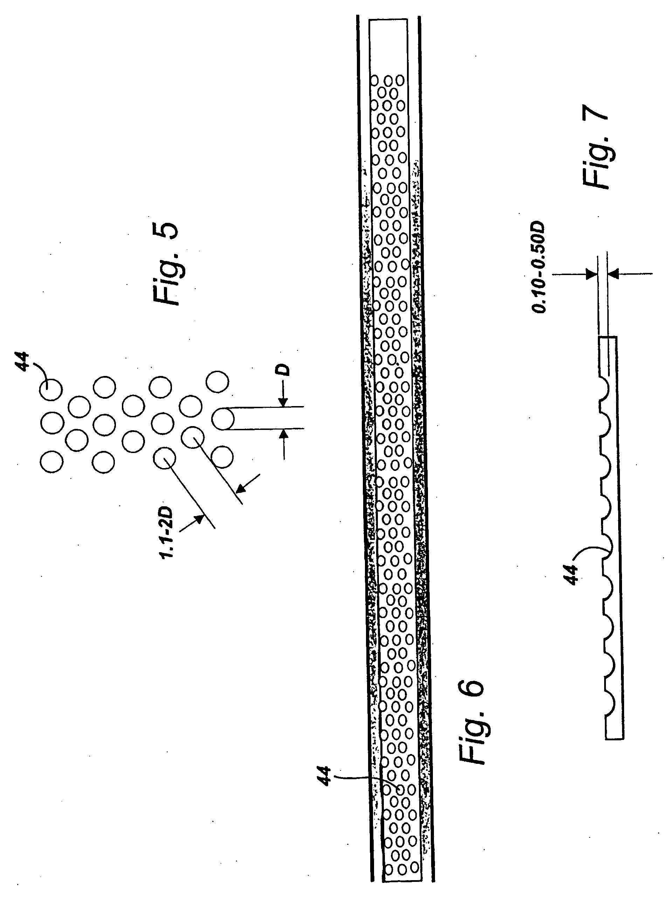

Concavities 42 are formed in both surfaces 40, 38. As best seen in Figures 5-7, the concavities 42 are discrete surface indentations, or dimples, that may be semispherical in shape, but the invention is not limited as such. In addition, the concavity surface may be altered for various geometries of dimple spacing, diameters, depths, as well as shapes. For a given dimple diameter D, the center-to-center distance between any two adjacent dimples is 1.1D to 2D, and the depth of the dimples may be 0.10D to 0.50D (see Figs. 5 and 7). Preferably, the channel aspect ratio, defined as the channel height divided by the channel width, is in the range of 1 to 0.2, and more preferably in a range of 0.4 to 0.2. The ratio of channel height to concavity diameter is in the range of 0.25 to 5. The concavities may be formed by simple end-milling, EDM, ECM or laser.

Figures 5 and 6 show arrays of dimples 44 that are arranged in staggered rows, but here again, the specific array configuration may vary as desired. Note in Figures 6 and 7 that the dimples 44 are ovaloid in shape, as opposed to the circular dimples 42 in Figure 5.

With reference to Figure 4, impingement cooling holes 46 may be provided in axially spaced relation along each cooling channel 36. This allows for the spaced introduction of cooling air into the channels 36 along the axial length of the segment, and about its circumference, further enhancing cooling of the segment.

The addition of surface concavities and impingement holes enhances cooling by as much as 100%. This also means that the cooling channels may be extended by a factor of 2 without requiring additional cooling air.

## Claims

1. A connector segment (22) for connecting a combustor liner (24) and a transition piece (20) in a gas turbine, the connector segment (22) having a substantially cylindrical shape and being of double-walled construction including inner and outer walls (32, 34) and a plurality of cooling channels (36) extending axially along the segment (22), between said inner and outer walls (32, 34) said cooling channels (36) defined in part by radially inner and outer surfaces (40, 38) **characterized in that** both of said radially inner and outer surfaces (40, 38) are formed with an array of concavities (42), each concavity (42) having a diameter D with centre to centre distance between adjacent concavities (42) being equal to about 1.1 - 2 D and wherein a ratio of channel height to concavity diameter D is in the range of 0.25 - 5.

2. The connector segment of claim 1 further comprising axially spaced holes (46) in said outer wall (38) communicating with at least some of said cooling channels (36).

3. The connector segment of claim 1 or 2 wherein said concavities (42) are semispherical in shape.

4. The connector segment of claim 3 wherein said concavities (42) are arranged in staggered rows.

5. The connector segment (22) of claim 1, wherein said cooling channels (36) have an aspect ratio, defined as the channel height divided by the channel widht, from 0.2 to 1.

## Patentansprüche

1. Verbindersegment (22) zum Verbinden eines Brennereinsatzes (24) und eines Übergangsstückes (20) in einer Gasturbine, wobei das Verbindersegment (22) im Wesentlichen eine zylindrische Form und einen doppelwandigen Aufbau mit Innen- und Außenwänden (32, 34) und mehreren Kühlkanälen (36) hat, die sich axial entlang des Segmentes (22) zwischen den Innen- und Außenwänden (32, 34) erstrecken, wobei die Kühlkanäle (36) teilweise durch radial innere und äußere Oberflächen (49, 38) definiert sind, **dadurch gekennzeichnet, dass** sowohl die radial inneren als auch äußeren Oberflächen (40, 38) mit einer Anordnung von Vertiefungen (42) ausgebildet sind, wobei jede Vertiefung (42) einen Durchmesser D mit einem Mittelpunktsabstand zwischen benachbarten Vertiefungen (42) gleich ca. 1,1 bis 2 D hat, und wobei ein Verhältnis der Kanalhöhe zum Vertiefungsdurchmesser D in dem Bereich von 0,25 bis 5 liegt.

2. Verbindersegment nach Anspruch 1, welches ferner axial in Abstand angeordnete Löcher (46) in der Außenwand (38) aufweist, die mit wenigstens einigen von den Kühlkanälen (36) in Verbindung stehen.

3. Verbindersegment nach Anspruch 1 oder 2, wobei die Vertiefungen (42) eine halbkugelförmige Form haben.

4. Verbindersegment nach Anspruch 3, wobei die Vertiefungen (42) in gestaffelten Reihen angeordnet sind.

5. Verbindersegment (22) nach Anspruch 1, wobei die Kühlkanäle (36) ein als die Kanalhöhe dividiert durch die Kanalbreite definiertes Aspektverhältnis von 0,2 bis 1 haben.

## Revendications

1. Segment de connexion (22) pour relier une chemise (24) de chambre de combustion et une pièce de transition (20) dans une turbine à gaz, le segment de connexion (22) ayant une forme sensiblement cylindrique et étant une construction à double paroi comprenant des parois intérieure et extérieure (32, 34) et une pluralité de canaux de refroidissement (36) s'étendant axialement le long du segment (22) entre lesdites parois intérieure et extérieure (32, 34), lesdits canaux de refroidissement (38) étant partiellement définis par des surfaces radialement intérieure et extérieure (40, 38), **caractérisé en ce que** les deux dites surfaces radialement intérieure et extérieure (40, 38) sont pourvues d'une série de concavités (42), chaque concavité (42) ayant un diamètre D avec un entre-axe d'environ 1,1 à 1,2 D entre des concavités adjacentes (42), et un rapport hauteur de canal/diamètre D de concavité étant de 0,25 à 5.

2. Segment de connexion selon la revendication 1, comportant en outre, dans ladite paroi extérieure (38), des trous espacés axialement (46) communiquant avec au moins certains desdits canaux de refroidissement (36).

3. Segment de connexion selon la revendication 1 ou 2, dans lequel lesdites concavités (42) ont une forme hémisphérique.

4. Segment de connexion selon la revendication 3, dans lequel lesdites concavités (42) sont organisées en rangées décalées.

5. Segment de connexion (22) selon la revendication 1, dans lequel lesdits canaux de refroidissement (36) ont un rapport hauteur/largeur, défini comme étant la hauteur d'un canal divisée par la largeur d'un canal, de 0,2 à 1.
